Europäisches Patentamt

(19) European Patent Office

Office européen des brevets

(11) Publication number: **0 009 383**
**B1**

## (12) EUROPEAN PATENT SPECIFICATION

(45) Date of publication of patent specification: **15.02.84**

(51) Int. Cl.³: **F 16 L  33/22, F 16 K  7/06**

(21) Application number: **79301901.9**

(22) Date of filing: **14.09.79**

(54) **A device for attachment of a resilient and/or flexible tube onto a bleed nipple.**

(30) Priority: **15.09.78 GB 3706678**
**06.12.78 GB 4738478**
**11.12.78 GB 4794478**
**05.02.79 GB 7903892**

(43) Date of publication of application:
**02.04.80 Bulletin 80/7**

(45) Publication of the grant of the patent:
**15.02.84 Bulletin 84/7**

(84) Designated Contracting States:
**AT BE CH DE FR GB IT LU NL SE**

(56) References cited:
**CH - A -  103 277**
**CH - A -  308 976**
**DE - A - 1 802 610**
**FR - A -  676 603**
**FR - A - 2 356 867**
**US - A - 4 063 706**

(73) Proprietor: **Witt, John Edward**
**"Cross Trees" Oakcroft Road**
**West Byfleet Surrey (GB)**

(72) Inventor: **Witt, John Edward**
**"Cross Trees" Oakcroft Road**
**West Byfleet Surrey (GB)**

(74) Representative: **Williams, John Francis et al,**
**J.F. Williams & Co 34 Tavistock Street**
**London WC2E 7PB (GB)**

Courier Press, Leamington Spa, England.

## A device for attachment of a resilient and/or flexible tube onto a bleed nipple

This invention relates to a device for attachment of a resilient and/or flexible tube onto a nipple, nozzle or like connection and to bleeding equipment for use therewith.

The invention has particular application to the field of bleeding hydraulic equipment such as vehicle brakes and clutches for the attachment of a resilient and/or flexible bleed tube onto a bleed nipple of a brake or slave cylinder.

Up to the present time, there has only been marginal difficulty in attaching a resilient and/or flexible tube to a bleed nipple of ordinary relatively low pressure hydraulic equipment since the apparatus has usually used relatively large diameter tubes as there is only a relatively small pressure build up in the tubes, even in bleeders incorporating a one way valve. However, difficulty has been experienced on a number of occasions due to the resilient and/or flexible tube being blown off the nipple and this is undesirable even when it happens only rarely. Also systems using a higher pressure in the hydraulic system can cause severe difficulties and in one of the improved forms of bleeding equipment proposed here, pressure build up is a serious problem which has to be overcome if its advantages are to be utilised. In CH—A 308976, it has been proposed to attach a hose to a nozzle like structure, which structure is provided as a male or female element whereby so as to enable the hose to be readily attached and detached from other hoses or ancillary equipment. This is achieved by means of a ring which is pushed up along the hose and over the nozzle to secure the hose thereto in a relatively permanent connection.

The present invention seeks to enable a resilient and/or flexible tube to be readily attached to and detached from a nipple nozzle or like connection in a simple and economical way.

According to a first aspect of the invention, there is provided a device for attachment of a resilient and/or flexible tube onto a bleed nipple and for attachment of the resilient and/or flexible tube to a transparent tube characterised in that the device comprises a strap like element having at least two apertures the first of which apertures is intended to secure the resilient and/or flexible tube to the bleed nipple and which has a diameter large enough to enable it to be pushed over the resilient and/or flexible tube, when the resilient or flexible tube is in position on the bleed nipple but small enough to cause the resilient and/or flexible tube to grip the bleed nipple and the second of which apertures is intended to secure the resilient and/or flexible tube to the transparent tube by passage of the two tubes through the second aperture. According to a second aspect of the invention, there is provided a brake, clutch or like bleeding device comprising a resilient and/or flexible tube for attachment to a bleed nipple and a transparent tube connected thereto, characterised in that an attachment device according to claim 1 is provided for attachment of the resilient and/or flexible tube to the bleed nipple and for attachment of the resilient and/or flexible tube to the transparent tube.

The resilient and/or flexible tube may have a valve arrangement therein. The valve arrangement may comprise a valve forming means which provides and retains a bend in the resilient and/or flexible tube sufficiently sharp to completely block the resilient and/or flexible tube at normal atmospheric pressure.

The advantage of the invention lies mainly in the security of the connection of the resilient and/or flexible tube to the nipple, nozzle or like connection.

The invention will now be described in greater detail, by way of example, with reference to the drawings, in which:

Figure 1 is a view showing the use of a retaining element for prevention of the removal by accident of a bleeder from the bleed nipple;

Figure 2 is a view of a wire element used for forming a valve in a tube;

Figure 3 is a view of the wire element of Figure 2 in use;

Figures 4 and 5 are sectional views used to indicate the operation of the wire element valve shown in Figure 3;

Figure 6 is a perspective view of a practical form of bleeding device using the principle of the retaining element of Figure 1 and the wire element of Figure 2 with the valve in use;

Figure 7 is a perspective view of the apparatus shown in Figure 6 but with wire element unclipped and the retaining element set up for a different size of bleed nipple, and

Figure 8 is a perspective view showing how the retaining element of Figures 6 and 7 can be used to form a valve without the use of the wire element.

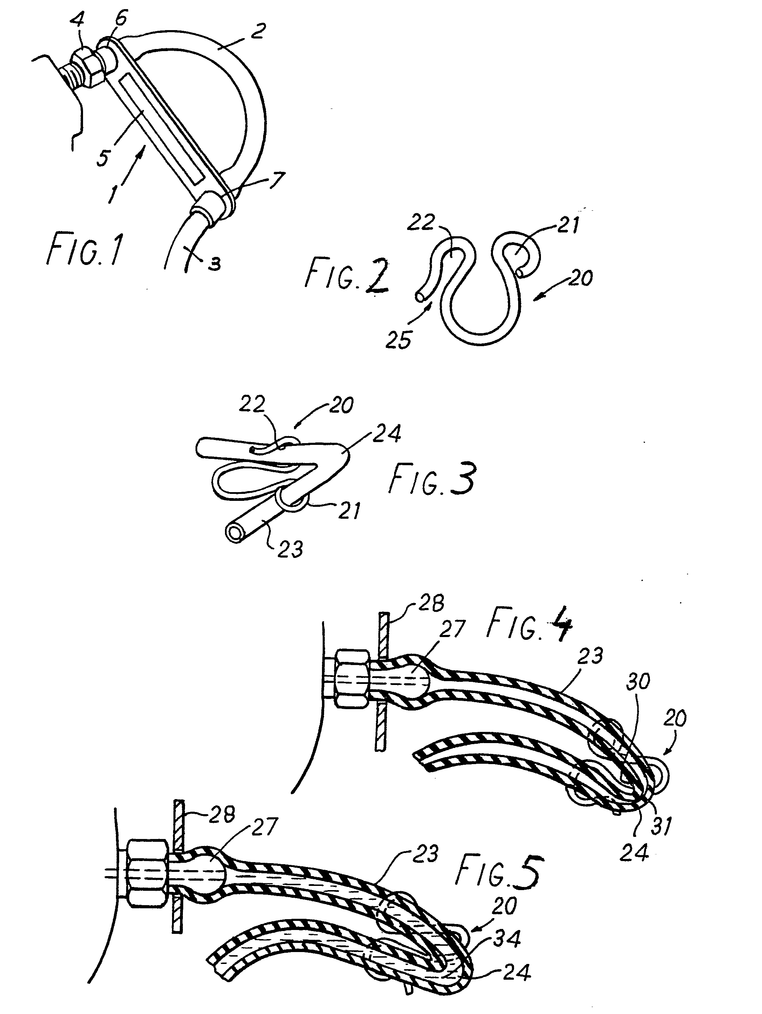

Referring first to Figure 1, a device for attachment of a resilient and/or flexible tube of a brake bleeder is shown with the tube connected to a bleed nipple. In this figure the device is indicated at 1, the resilient flexible tube is indicated at 2, attached to a transparent tube 3 and the bleed nipple is indicated at 4.

The device 1 comprises a flat plate-like element 5 having a first aperture 6 at one end and a second aperture 7 at the other end. The aperture 6 is larger than the diameter of the tube 2 and is in fact large enough to pass over the head part of the bleed nipple 4 when the tube is pushed thereon.

The flexible tube 2 is secured to the transparent tube 3 by pushing the transparent tube 3 into the flexible tube 2 and securing the two together by means of the second aperture 7. A one-way valve may be provided either at the end of the tube 3 or at an intermediate position thereof. If a small base transparent tube is used, the one way valve may not be necessary.

The operation of the device will now be described:—

Before attaching the flexible tube 2 to the bleed nipple 4, the plate-like element 5 is pushed well back along the flexible tube 2 so that a section of the flexible tube 2 protrudes from the aperture 6. Then the free end of the flexible tube is pushed over the head of the bleed nipple 4 so far as it will go. Thereafter the plate-like element is passed along the flexible tube 2 until it passes over the head of the bleed nipple 4 to take up the position shown. This will cause the tube 2 to grip the nipple 4 and prevent significant bulging or spreading of the end of the flexible tube 2. The nipple is then unscrewed in the usual way and the brake pedal pumped to bleed the brakes.

Only the middle portion of the flexible tube 2 can expand under pressure, the free end of the flexible tube being restrained by the edges of the aperture 6 in the plate-like element 5. Thus no brake fluid can pass back around the head 9 of the bleed nipple 4, braking the seal between the flexible tube and the bleed nipple and allowing pressure to be taken up which might otherwise force the flexible tube 2 off the bleed nipple 4.

The transparent tube 3 and/or an extension thereof on the other side of the one way valve may have a very small internal diameter, of the order of 1.5 mm or less, and may extend to a length as required to bring the tube to a position which is visible to the operator. With a tube of this order, a stroke of the brake pedal can fill a length of tube of the order of 2—3 metres (Ignoring the brake fluid in the flexible tube 2), with a small bore tube of this length the valve is not usually necessary.

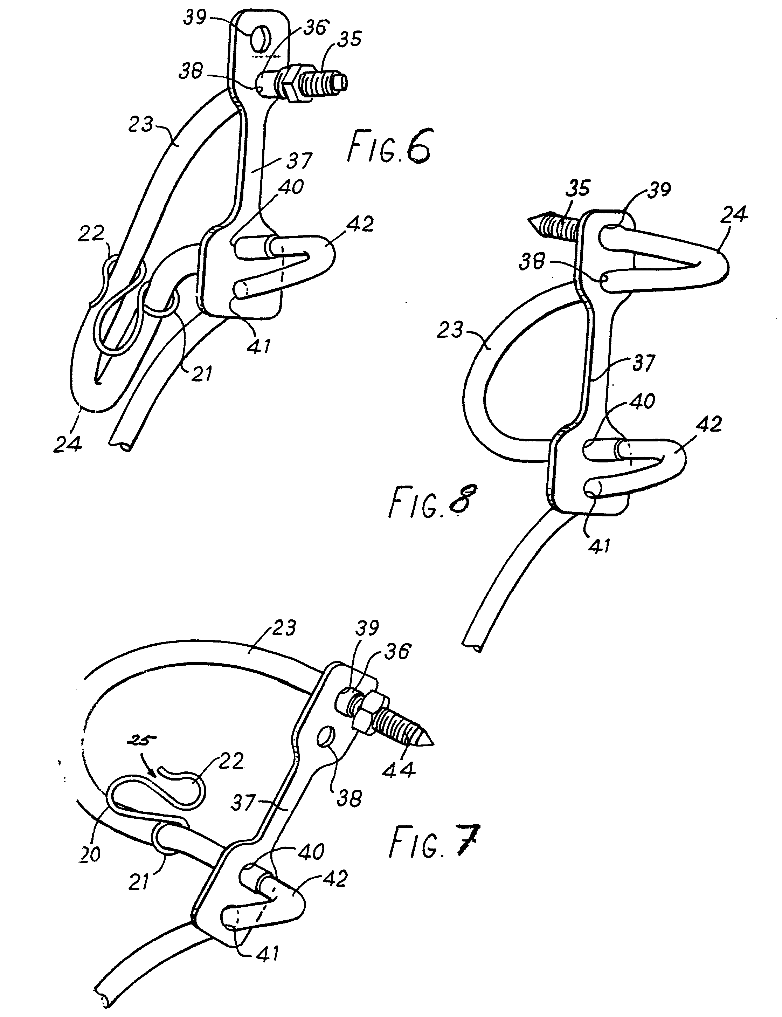

Referring now to Figures 2 and 3, there is shown a wire element 20 bent around to define two closely spaced apertures 21 and 22.

The apertures in the element of Figure 2 are used for threading a tube 23 through (see Figure 3). This tube 23 provides a valve action at 24 by virtue of the bend formation of the tube 23 as will be described in relation to Figures 4 and 5. The arrangement is such that the spacing of the aperture 21 and 22 and the band 24 provided in the tube 23 ensures that the tube 23 will remain blocked when subjected only to atmospheric pressure.

One aperture 22 has a keyhole like shape and is open at 25 at one side of the element. This enables quick insertion and release of one part of the tube 23 which enables the valve to be opened out and effectively removed.

Figure 4 shows the flexible tube 23 with the wire element 20 in the position which it takes up when initially attached to a bleed nipple 27. A retaining element, for example as shown in Figure 1 is shown at 28. As can be seen, with no pressure present in the tube 23, the opposite sides 30 and 31 of the tube will be forced together by the sharpness of the curve in the tube and will effectively provide a shut off valve. Once pressure is applied to the tube e.g. by the flow of brake or clutch fluid from the released nipple, 27 the tube 23 will swell and will provide a passageway for the brake fluid 34 around the bend 24 as is shown in Figure 5. Once the pressure is removed the tube will return to its configuration as shown in Figure 4 and in this way will seal the brake system successfully.

It will be observed that pressure in either direction will open the valve but this is of no significance since the only pressure which is sufficient to open the valve during a brake or clutch bleeding operation is that of the brake fluid from the brake system, the other side of the valve usually being of atmospheric pressure.

Figure 6 shows the use of the valve arrangement for a brake bleeding operation, a brake nipple being indicated at 35 and shown removed from the brake cylinder into which it is normally screwed. As can be seen, the full length of the tube 23 enables one end of the tube to be pushed over the nipple portion of the bleed nipple 36, it being retained thereon by means of a strap member 37. The retaining strap 37 is provided with four apertures 38, 39, 40 and 41 in two pairs one aperture 38 of the apertures 38 and 39 at one end receiving a flexible tube 23 and one aperture 40 of the lower aperture 40 and 41 receiving the other end of the flexible tube 23. Into the lower end of the flexible tube 23 is connected a transparent tube 42 which is then passed back through the aperture 41 to assist in its retention. The tube 42 may be of any suitable length, preferably being a small bore tube 2 to 3 metres in length, the free end of which suitably inserted into or connected to a container (not shown) for receiving brake or clutch fluid which is pumped out during a bleeding operation.

The wire element 20 provides for a valve action in the tube 23 at 24. It is to be noted that the strap 37 is provided with two upper apertures 38 and 39, the aperture 38 being arranged to hold the tube 23 on the bleed nipple 35, the aperture 39 being unused in Figure 6. Suitable the two apertures 38 and 39 are of different sizes so that they can be used with different sizes of bleed nipple provided that sufficient stretch and flexibility is present in the tube 23. Thus Figure 6 shows the use of the lower aperture 38 for a small bleed nipple 10 while Figure 7 shows the use of the upper aperture 39 for a large bleed nipple 44.

Figure 7 demonstrates the use of the open slotted portion 25 in the wire element 20 to enable the valve to be opened and the valve action provided at 24 to be dispensed with.

This is useful in brake bleeding operations where the small bore tube is used as usually in this case the valve is not needed, the length of the tube being a sufficient safeguard against indrawn air. Thus the tube 23 is forced out of the slot 25 thus removing the restricted bend 24 and allowing full flow of liquid through the tube 23. As will be appreciated, when it is desired to return to the valve action, it is a simple matter to push the tube 23 back through the slot 25 into the aperture 22.

As is usual in brake bleeding operations, the transparent tube 42 is preferably connected with a container or the like (not shown) for receiving the bleed fluid.

Figure 8 shows the possibility of providing a valve using only the retaining element 37. In this case, the tube 23 is threaded through both of the upper apertures 38, 39 so as to provide the bend 24 in the tube 23 with the desired valve action. In this case the apertures 38 and 39 may be made of the same dimensions. To provide for use with different sizes of bleed nipple, three apertures could be provided, the upper aperture being, for example smaller than the other two. Thus for larger nipples the middle and lower apertures would be used (the middle aperture providing the retention on the nipple) and for smaller nipples the middle and upper apertures would be used (the upper aperture providing retention on the nipple).

It will be appreciated that various modifications could be made to the above described embodiments without departing from the scope of the invention.

For example, the wire valve element could be replaced by a suitable moulded or extruded plastics clip arrangement. Two of the valved portions could be used together on opposite ends of a tube for sampling purposes.

## Claims

1. A device for attachment of a resilient and/or flexible tube (2, 23) onto a bleed nipple (4, 27, 35, 44) and for attachment of the resilient and/or flexible tube (3, 42) to a transparent tube characterised in that the device comprises a strap like element (5, 28, 37) having at least two apertures (6, 38, 39; 7, 40, 41) the first of which apertures (6, 38, 39) is intended to secure the resilient and/or flexible tube to the bleed nipple and which has a diameter large enough to enable it to be pushed over the resilient and/or flexible tube (2, 23), when the resilient or flexible tube is in position on the bleed nipple (4, 27, 35, 44) but small enough to cause the resilient and/or flexible tube (2, 23) to grip the bleed nipple (4, 27, 35, 44) and the second of which apertures (7, 40, 41) is intended to secure the resilient and/or flexible tube (2, 23) to the transparent tube (3, 42) by passage of the two tubes through the second aperture (7, 40, 41).

2. A device as claimed in claim 1, wherein the strap like element (37) has an additional aperture (38) of a different size to at least one of the other two apertures (39, 40) for enabling the resilient and/or flexible tube (23) to be used with different sizes of bleed nipple.

3. A device as claimed in claim 1 wherein the strap like element (37) has four apertures (38, 39, 40, 41), two adjacent each end, at least two adjacent apertures (38, 39) being of different size.

4. A device as claimed in claim 3, wherein the strap like element 37 is of dumb bell shape with apertures (38, 39, 40, 41), the apertures being in the wider portions of the element.

5. A brake, clutch or like bleeding device comprising a resilient and/or flexible tube (2, 43) for attachment to a bleed nipple and a transparent tube (3, 42) connected thereto, characterised in that an attachment device according to claim 1 is provided for attachment of the resilient and/or flexible tube (2, 43) to the bleed nipple (4, 27, 35, 44) and for attachment of the resilient and/or flexible tube (2, 43) to the transparent tube (3, 42).

6. A bleeding device as claimed in claim 5, wherein the resilient and/or flexible tube (23) has a valve arrangement (24) therein.

7. A bleeding device as claimed in claim 6, wherein the valve arrangement (24) comprises a valve forming means (20, 37) which provides and retains a bend in the resilient and/or flexible tube (23) sufficiently sharp to completely block the resilient and/or flexible tube (23) at normal atmospheric pressure, but permit the flow of fluid at elevated pressure.

8. A bleeding device as claimed in claim 7, wherein the valve forming means comprises an element (20, 37) having two adjacent apertures (21, 22, 38, 39) through which the resilient and/or flexible tube (23) passes.

9. A bleeding device as claimed in claim 8, wherein at least one of the adjacent apertures (21, 22) is open to one side like a keyhole aperture whereby the resilient and/or flexible tube (23) can be removed or inserted through the open part of the aperture(s).

10. A bleeding device as claimed in claim 8 or 9, wherein the valve forming means comprises a wire element (20) bent round to provide apertures (21, 22).

11. A bleeding device as claimed in claim 10 or 11, wherein the two apertures (38, 39) are provided in the retaining element (37), one aperture (38) being the said first aperture and the other aperture (39) being a fourth aperture adjacent to the first aperture (38).

12. A bleeding device as claimed in any one of claims 5 to 11, wherein the transparent tube (3, 42) comprises a small bore tube whose internal diameter is significantly smaller than the internal diameter of the resilient and/or flexible tube (2, 23).

13. A bleed device as claimed in claim 12 wherein the internal diameter of the transparent tube (3, 42) is of the order of 1.5 mm or less.

## Revendications

1. Dispositif pour la fixation d'un tube résiliant et/ou flexible (2, 23) sur un gland de purge (4, 27, 35, 44) et pour la fixation d'un tube résiliant et/ou flexible (3, 42) sur un tube transparent, caractérisé en ce qu'il comprend un élément assimilable à une éclisse (5, 28, 37) ayant au moins deux ouvertures (6, 38, 39; 7, 40, 41), la première de ces ouvertures (6, 38, 39) étant destinée à fixer le tube résiliant et/ou flexible sur le gland de purge et d'un diamètre suffisant pour lui permettre d'être poussé sur le tube résiliant et/ou flexible (2, 23), lorsque le tube résiliant ou flexible est en position sur le gland de purge (4, 27, 35, 44) mais suffisamment petit pour que le tube résiliant et/ou flexible (2, 23) fasse prise sur le gland de purge (4, 27, 35, 44), et la seconde des ouvertures (7, 40, 41) étant destinée à fixer le tube résiliant et/ou flexible (2, 23) sur le tube transparent (3, 42) par le passage des deux tubes au travers de la seconde ouverture (7, 40, 41).

2. Dispositif selon la revendication 1, caractérisé en ce que l'élément du type éclisse (37) a une ouverture supplémentaire (38) de dimensions différentes de celles d'au moins l'une des autres ouvertures (39, 40) pour permettre d'utiliser le tube résiliant et/ou flexible avec différentes dimensions de gland de purge.

3. Dispositif selon la revendication 1, caractérisé en ce que l'élément du type éclisse (37) a quatre ouvertures (38, 39, 40, 41), deux au voisinage de chaque extrémité, au moins deux ouvertures voisines l'une de l'autre (38 et 39) étant de dimensions différentes.

4. Dispositif selon la revendication 3, caractérisé en ce que l'élément du type éclisse (37) a la forme d'un haltère avec des ouvertures (38, 39, 40, 41) qui se trouvent dans les parties les plus larges de l'élément.

5. Dispositif de purge pour frein, embrayage ou analogue comprenant un tube résiliant et/ou flexible (2, 43) pour une fixation sur un gland de purge et un tube transparent (3, 42) qui y est raccordé, caractérisé en ce qu'un dispositif de fixation conforme à la revendication 1 est prévu pour fixation du tube résiliant et/ou flexible (2, 43) au gland de purge (4, 27, 35, 44) et pour fixation du tube résiliant et/ou flexible (2, 43) au tube transparent (3, 42).

6. Dispositif selon la revendication 5, caractérisé en ce qu'un tube résiliant et/ou flexible (23) comprend un système à vanne (24).

7. Dispositif de purge selon la revendication 6, caractérisé en ce que ledit système à vanne (24) comprend un moyen formant vanne (20, 37) qui crée et maintient un coude du tube résiliant et/ou flexible (23) suffisamment serré pour bloquer complètement le tube résiliant et/ou flexible (23) sous pression atmosphérique normale, mais permet l'écoulement du fluide, sous des pressions élevées.

8. Dispositif de purge selon la revendication 7, caractérisé en ce que le moyen formant vanne comprend un élément (20, 37) ayant deux ouvertures voisines (21, 22, 38, 39) par lesquelles passe le tube résiliant et/ou flexible (23).

9. Dispositif de purge selon la revendication 8, caractérisé en ce qu'au moins l'une des ouvertures voisines (21, 22) est ouverte d'un côté à la manière d'un trou de serrure permettant d'extraire ou d'insérer le tube résiliant et/ou flexible (23) par la partie ouverte de la ou des ouvertures.

10. Dispositif de purge selon la revendication 8 ou 9, caractérisé en ce que le moyen formant vanne comprend un élément en fil métallique (20) recourbé pour former les ouvertures (21, 22).

11. Dispositif de purge selon la revendication 10 ou 11, caractérisé en ce que deux ouvertures (38, 39) sont prévues dans l'élément de retenue (37). Une ouverture (38) étant la première ouverture mentionnée et l'autre ouverture (39) étant une quatrième ouverture, voisine de la première (38).

12. Dispositif de purge selon l'une des revendications 5 à 11, caractérisé en ce que le tube transparent (3, 42) comprend un tube de faible alésage dont le diamètre intérieur est sensiblement plus petit que le diamètre intérieur du tube résiliant et/ou flexible (2, 23).

13. Dispositif de purge selon la revendication 12, caractérisé en ce que le diamètre intérieur du tube transparent (3, 42) est de l'ordre de 1,5 mm ou moins.

## Patentansprüche

1. Vorrichtung zur Anbringung eines elastischen und/oder flexiblen Rohres (2, 23) an einem Entlüftungsanschluß (4, 27, 35, 44) und für die Anbringung des elastischen und/oder flexiblen Rohres (3, 42) an ein transparentes Rohr, dadurch gekennzeichnet, daß die Vorrichtung ein Streifenförmig ausgebildetes Element (5, 28, 37) mit mindestens zwei Öffnungen (6, 38, 39; 7, 40, 41) aufweist, wobei die erste der Öffnungen (6, 38, 39) zir Sicherung des elastischen und/oder flexiblen Rohres an dem Entlüftungsanschluß dient und einen Durchmesser aufweist, der genügend groß ist, so daß sie über das elastische und/oder flexible Rohr (2, 23) geschoben werden kann, wenn das elastische und/oder flexible Rohr an dem Entlüftungsanschluß (4, 27, 35, 44) angeordnet ist, der jedoch auch genügend klein ist, so daß bewirkt wird, daß das elastische und/oder flexible Rohr (2, 23) den Entlüftungsanschluß (4, 27, 34, 44) greift, und wobei die zweite der Öffnungen (7, 40, 41) zur Sicherung des elastischen und/oder flexiblen Rohres (2, 23) an dem transparenten Rohr (3, 42) dient, indem die beiden Rohre durch die zweite Öffnung (7, 40, 41) hindurchgeführt werden.

2. Vorrichtung nach Anspruch 1, bei welcher das streifenförmig ausgebildete Element (37) eine zusätzliche Öffnung (38) aufweist, deren Größe sich zumindest von einer der zwei anderen Öffnungen (39, 40) unterscheidet, so daß das elastische und/oder flexible Rohr (23) für verschieden große Entlüftungsanschlüsse verwendet werden kann.

3. Vorrichtung nach Anspruch 1, bei welcher das streifenförmig ausgebildete Element (37) vier Öffnungen (38, 39, 40, 41) aufweist, nämlich zwei benachbart zu jedem Ende, wobei zumindest zwei benachbarte Öffnungen (38, 39) verschieden groß sind.

4. Vorrichtung nach Anspruch 3, bei welcher das streifenförmige Element (37) mit den Öffnungen (38, 39, 40, 41) hantelförmig ausgebildet ist, wobei sich die Öffnungen in den breiteren Abschnitten des Elements befinden.

5. Vorrichtung zur Entlüftung einer Bremse, Kupplung oder dergleichen, welche ein elastisches und/oder flexibles Rohr (2, 43) zur Anbringung an einem Entlüftungsanschluß und eine daran angeschlossenes transparentes Rohr (3, 42) aufweist, dadurch gekennzeichnet, daß eine Befestigungsvorrichtung nach Anspruch 1 für die Befestigung bzw. Anbringung des elastischen und/oder flexiblen Rohres (2, 43) an dem Entlüftungsanschluß (4, 27, 35, 44) und für die Anbringung des elastischen und/oder flexiblen Rohres (2, 43) an das transparente Rohr (3, 42) vorgesehen ist.

6. Entlüftungsvorrichtung nach Anspruch 5, bei welcher in dem elastischen und/oder flexiblen Rohr (23) eine Ventilanordnung (24) vorgesehen ist.

7. Entlüftungsvorrichtung nach Anspruch 6, bei welcher die Ventilanordnung (24) eine Ventilformungseinrichtung (20, 37) aufweist, durch welche in dem elastischen und/oder flexiblen Rohr (23) eine Krümmung gebildet und beibehalten wird, deren Krümmungsgrad genügend groß ist, so daß das elastische und/oder flexible Rohr (23) bei normalem Atmosphärendruck vollständig abgeblockt, jedock bei höherem Druck Fluidströmung ermöglicht wird.

8. Entlüftungsvorrichtung nach Anspruch 7, bei welcher die Ventilformungseinrichtung ein Element (20, 37) mit zwei benachbarten Öffnungen (21, 22, 38, 39) aufweist, durch welche das elastische und/oder flexible Rohr (23) hindurchgeführt ist.

9. Entlüftungsvorrichtung nach Anspruch 8, bei welcher zumindest eine der banachbarten Öffnungen (21, 22) nach einer Seite hin ähnlich einer Schlüsselkranzöffnung offen ist, wodurch das elastische und/oder flexible Rohr (23) über den offenen Teil der Offnung(en) eingesetzt und herausgenommen werden kann.

10. Entlüftungsvorrichtung nach einem der Ansprüche 8 oder 9, bei welcher die Ventilformmungseinrichtung ein Drahtelement (20) aufweist, welches zur Bildung der Öffnungen (21, 22) rund gebogen ist.

11. Entlüftungsvorrichtung nach einem der Ansprüche 10 oder 11, bei welcher die beiden Öffnungen (38, 39) in dem Halteelement (37) vorgesehen sind, wobei eine Öffnung (38) die erste Öffnung und die andere Öffnung (39) eine vierte, an die erste Öffnung (38) angrenzende Öffnung darstellt.

12. Entlüftungsvorrichtung nach einem der Ansprüche 5 bis 11, bei welcher das transparente Rohr (3, 42) ein Rohr mit kleiner Bohrung aufweist, dessen Innendurchmesser erheblich kleiner ist als der Innendurchmesser des elastischen und/oder flexiblen Rohres (2, 23).

13. Entlüftungsvorrichtung nach Anspruch 12, bei welcher der Innendurchmesser des transparenten Rohres (3, 42) in der Größenordnung von 1,5 mm oder weniger liegt.

0 009 383

FIG.1

FIG.2

FIG.3

FIG.4

FIG.5

1

FIG.6

FIG.8

FIG.7